# EUROPEAN PATENT SPECIFICATION

(11) **EP 1 078 187 B1**
(45) Date of publication and mention of the grant of the patent: **27.08.2003**
(21) Application number: 99922656.6
(22) Date of filing: 14.05.1999
(51) Int. Cl.: F16K 31/385, F16K 31/40

(54) **GAS VALVE AND METHOD OF DELIVERING A GAS PULSE**
GASVENTIL UND VERFAHREN ZUR ERZEUGUNG EINES DRUCKSTOSSES
SOUPAPE DE GAZ ET PROCEDE D'ACHEMINEMENT D'UN DEBIT GAZEUX

(30) Priority: 19.05.1998 NL 1009212
(43) Date of publication of application: 28.02.2001
(73) Proprietor: ASCO CONTROLS B.V., 3925 BD Scherpenzeel (NL)
(72) Inventor: VAN DER ZEE, Jan, NL-3925 BD Scherpenzeel (NL); OOMEN, Tjerk, NL-3925 BD Scherpenzeel (NL)
(74) Representative: Louet Feisser, Arnold
(86) International application number: NL9900297
(87) International publication number: WO99060292

(56) References cited:
- EP-A- 0 769 645
- WO-A-96/27095
- CH-A- 547 457
- DE-A- 19 654 284
- NL-C- 69 099
- US-A- 4 911 401
- US-A- 5 125 621
- US-A- 5 145 145

## Description

The invention relates to a gas valve comprising a housing with a gas inlet and a gas outlet, which housing comprises an annular valve seat and a valve body disposed upstream thereof, which valve body can sealingly rest on said valve seat, and which is centrally provided in a membrane, whilst the circumferential edge of the membrane is fixed in the housing, wherein the side of the membrane that faces towards the valve seat is in direct communication with said gas inlet, and wherein the side of the membrane that faces away from the valve seat bounds a control chamber which is in communication with the gas inlet via a throttle opening, wherein means are present for allowing gas to flow out of said control chamber so as to reduce the pressure to such an extent that the valve body is lifted from the valve seat, whereby said means place said control chamber in communication with said gas outlet, said means comprising a stationary passage coaxially with respect to the valve body, whereby the valve body (15) is substantially annular. A valve of this kind is known from US-A-4911401.

The valve body of such a valve is preferably centrally disposed in the membrane. In another preferred embodiment, the membrane and the valve body are integrally made of a material which is flexible to such an extent that on the one hand it is sufficiently rigid to form the valve body whereas on the other hand it is sufficiently flexible to form the membrane.

A valve of this kind can be used in particular for delivering a gas pulse, that is, a brief but intensive gas flow-through, for example for the purpose of cleaning a dust filter wherein an intensive gas flow is effected through the dust filter for a short period of time in a direction opposed to the direction of the gas flow during filtration.

The gas valve comprises a membrane, one side of which is in direct communication with the gas inlet. This side of the membrane has a smaller surface area than the other side of the membrane, which other side forms the boundary of the control chamber. The former side has a smaller surface area because the valve body is centrally disposed in the membrane on that side. The control chamber is in communication with the gas inlet via one or more throttle openings, so that the same pressure, that is, the supply pressure of the gas valve, prevails on either side of the membrane in the closed position of the valve.

The gas valve is opened by suddenly reducing the gas pressure in the control chamber. This can be done by opening an electromagnetically controlled valve, so that the control chamber is placed into communication with the ambient atmosphere.

US-A-4911401 discloses a valve with a bleed assembly including a stationary hollow tube extending through the valve body and through the valve seat into the outlet of the valve. Because the means for allowing gas to flow out of the control chamber are formed by the stationary hollow tube said hollow tube will form an obstruction in the valve seat when the valve is open. Furthermore, the valve according to US-A-4911401 requires a sealing between said stationary hollow tube and the moving valve body.

The object of the invention is to improve a gas valve which can be opened quickly by discharging gas from a control chamber.

In order to accomplish that objective said means comprise a central passage through the valve body and the membrane extends both outside the valve body and within the valve body, seen in axial direction relative to the annular form, and the part of the membrane that extends within the valve body is fixed in the housing round a passage for discharging the gas from the control chamber to the gas outlet.

In order to promote a quick discharge of the gas from the control chamber, this passage preferably has a diameter of more than 15% of the diameter of the valve seat, more preferably a diameter of more than 20% of the diameter of the valve seat. A passage having such a large cross-sectional area can easily be provided centrally, that is, axially, in the valve body.

In one preferred embodiment the valve body and a membrane are integrally formed from a piece of a flexible material.

Preferably, the membrane extending within the valve body is substantially tubular at the location where it is fixed in the housing, extending in axial direction at that location, whereby it surrounds the passage.

In one preferred embodiment, the control chamber is annular and the wall of the control chamber disposed opposite said membrane comprises an annular protrusion extending into the control chamber, wherein, in the open position of the valve, the membrane is disposed on either side of said protrusion, that is, both within and outside the protrusion, seen in radial direction. In this manner the dead volume of the control chamber can be reduced and the protrusion can form a stop against which the valve body can bear in the open position of the valve.

In one preferred embodiment, the passage is connected to a second valve seat provided in the housing, which can be closed by a second valve body for placing the central passage into communication with the control chamber or shutting if off therefrom. Preferably, the second valve body is centrally provided in a second membrane, which second membrane on the one hand bounds the aforesaid control chamber and which on the other hand bounds a second control chamber, which second membrane comprises a central passage which is capable of placing the former control chamber into communication with the second control chamber, which passage is provided with a third valve seat, which mates with a closing member which forms part of the movable core of a controllable electromagnet.

Preferably, an electromagnetically controlled valve is present for controlling the connection between the control chamber and the gas outlet. This makes it possible to effect a quick opening of the passage between the control chamber and the gas outlet.

In one preferred embodiment, a stationary guide member is provided within the valve body, which guide member is fixed in the housing together with the central portion of the membrane. The passage for placing the control chamber into communication with the gas outlet may be provided through said guide member. The presence of such a guide member disposed within the valve body prevents the valve body from being moved to an undesirable position (out of alignment), whilst the guide means do not interfere with the gas flow round the valve body. In addition, the guide member functions to support the membrane.

Preferably, the membrane is sealingly enclosed at its circumferential edge between two annular surfaces of, respectively, two parts of the housing, wherein the two annular surfaces are substantially cylindrical surfaces, which surround one another. This makes it possible to accommodate the edge of the membrane in a satisfactory and reliable manner, also when the axial distance between the two parts of the housing slightly varies.

In one preferred embodiment, the housing of the gas valve consists of at least two attached-together parts, between which a sealing ring is fitted, wherein each of said parts is provided with a cylindrically extending surface, an inwardly extending surface and an outwardly extending surface, respectively, between which surfaces the sealing ring is fitted. Also in this case, the distance between the parts of the housing may slightly vary in axial direction without this having an adverse effect on the correct sealing between the two housings.

The above-described presence of two cylindrical surfaces between which the circumferential edge of the membrane and/or a sealing ring is present, may be considered to constitute a separate invention, and it can be used independently of the aforementioned aspects in a housing for a valve or for different hydraulic or pneumatic component when said housing consists of at least two parts which are sealingly connected with one another.

The invention furthermore relates to a method of delivering a gas pulse, wherein an electromagnetically controlled gas valve is opened quickly by having gas flow from a control chamber bounded by a membrane into the gas outlet, as a result of which the membrane is moved by the gas pressure in the gas inlet of the gas valve, causing the gas valve to open, wherein the gas is led from the gas inlet to the gas outlet of the gas valve.

Further aspects, which can be used independently and in combination with each other, will be disclosed by means of an embodiment and be defined in the claims.

In order to explain the invention more fully, an embodiment of an electromagnetically operated gas valve will now be described with reference to the drawing.
Figure 1 is a view of the gas valve;
Figure 2 is a sectional view along line II-II in Figure 1;
Figure 3 is a sectional view corresponding to Figure 2, showing the valve in partially open position;
Figure 4 shows a detail indicated by IV in Figure 2; and
Figure 5 shows an enlarged portion of Figure 2.

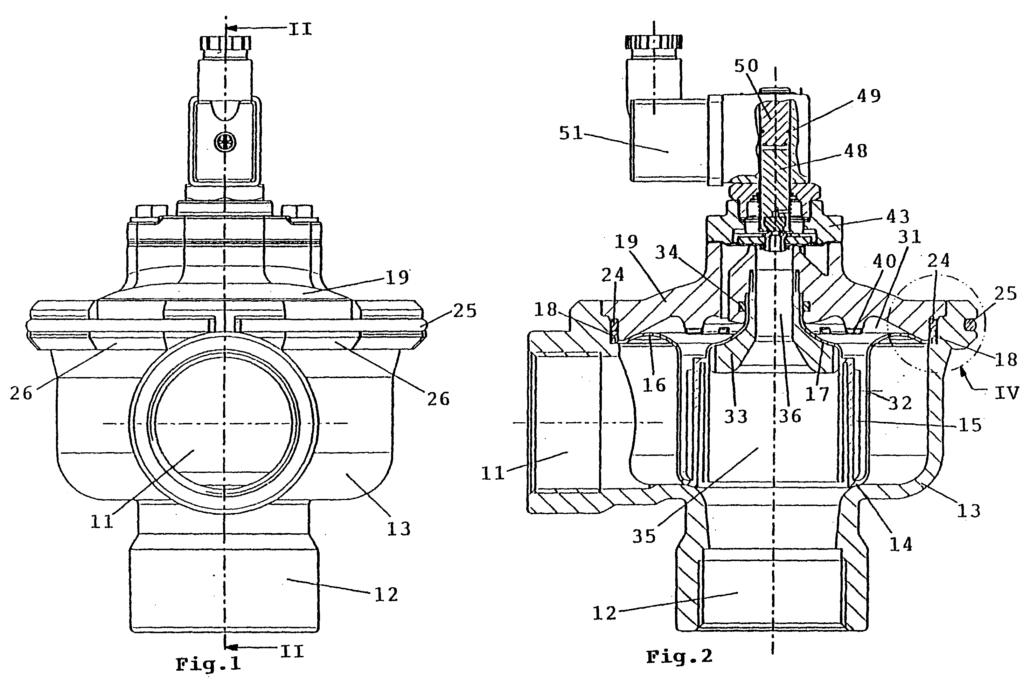

The gas valve is only schematically shown in the figures, and that in elevation in Figure 1. Figure 1 shows a gas inlet 11, to which a gas supply pipe can be attached by means of screw thread or other pipe connection. On its bottom side, the gas valve is provided with a gas outlet 12, to which a gas discharge pipe can be similarly connected. Both gas inlet 11 and gas outlet 12 are provided in the first housing part 13, in which also the annular valve seat 14 (Figure 2) is provided.

The gas valve furthermore comprises a valve body 15, which can rest sealingly on valve seat 14, as is shown in Figure 2. Valve body 15 is integral with membrane 16, 17. Membrane 16, 17 extends radially outwards (indicated by numeral 16) and radially inwards (indicated by numeral 17). The material of valve body 15 and membrane 16, 17 is flexible to such an extent that on the one hand it is sufficiently rigid to form the valve body whilst on the other hand it is sufficiently flexible to form membrane 16, 17. Membrane 16, 17 and valve body 15 may also be made of different materials.

The outwardly extending circumferential edge 18 of membrane 16 is accommodated in a recess between first housing part 13 and second housing part 19.

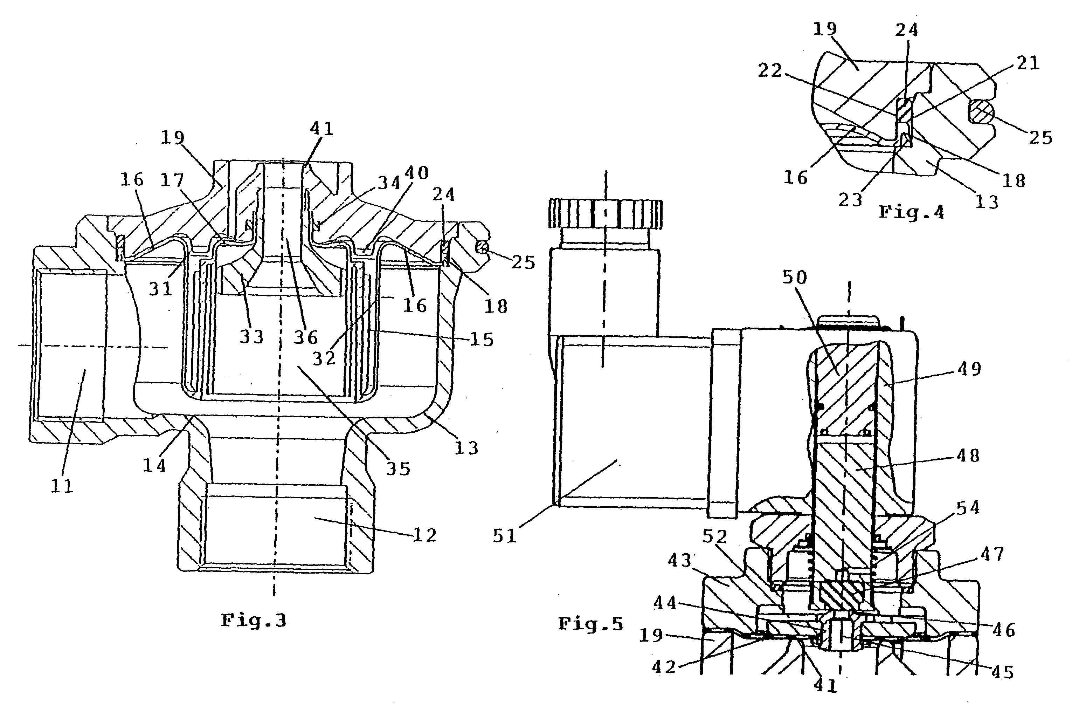

Figure 4 shows in more detail the connection between first housing part 13 and second housing part 19. First housing part 13 is provided with a cylindrical, inwardly extending wall 21, and second housing part 19 is provided with a cylindrical, outwardly extending wall 22. Between said two walls 21, 22 a space is present, in which the circumferential edge 18 of membrane 16 is accommodated. In order to effect a proper gastight seal, circumferential 18 of membrane 16 is provided with an obliquely outwardly extending rib 23, which sealingly abuts against wall 21 of first housing part 13.

Figure 4 also shows a sealing ring 24, which is likewise accommodated in the space between walls 21, 22 of, respectively, first and second housing part 13, 19. The sealing ring is an 0-ring, which is slightly compressed between walls 21, 22.

The distance between walls 21, 22 can be precisely determined in advance, and it does not depend on the relative positions in axial direction of first housing part 13 and second housing part 19. Flexible sealing ring 24 is thus compressed to a predetermined degree, which provides an optimum seal between first housing part 13 and second housing part 19. The same applies to circumferential edge 18 of membrane 17 and the rib 23 provided on said circumferential edge.

First housing part 13 and second housing part 19 are attached together by means of a substantially circular clip 25, which is fitted in an outwardly extending gutter of the first housing part along part of its length (Figure 4) and which abuts against a radially extending stop surface on parts 26 of second housing part 19 along another part of its length (Figure 1). A connection between the two housing parts 13, 19 of this kind is disclosed in the aforementioned publication WO96/27095 and also in publication WO96/27096. If this connection allows some play in axial direction between first housing part 13 and second housing part 19, an optimum seal between the two housing parts 13, 19 and a correct fixation of circumferential edge 18 of membrane 16 remains ensured, due to the use of the axially extending walls 21, 22.

Second housing part 19 and membrane 16, 17 together enclose a control chamber 31. The gas pressure in control chamber 31 exerts a downward force on membrane 16, 17, and thus on valve body 15, whilst the gas pressure in gas inlet 11 exerts an upward force on membrane 16 an thus on valve body 15. Control chamber 31 is connected to gas inlet 11 via throttle opening 32, so that the gas pressure that prevails in control chamber 31, which is closed for that matter, is the same as the gas pressure in gas inlet 11 in the closed position of the gas valve. Since the surface area of membrane 16, 17 on which the control chamber exerts the downward force is larger than the surface area of membrane 16 on which the same gas pressure exerts the upward force in the gas supply pipe, valve body 15 will rest on valve seat 14, thus closing the gas valve. It should be considered thereby that the gas pressure in gas outlet 13 will be lower than the gas pressure in gas inlet 11 at all times.

The radially inwardly extending portion of membrane 17 tapers off tubularly in upward direction, and it is clamped down between second housing part 19 and a guide member 33 fitted in said housing part, with an 0-ring 34 providing a proper seal. Guide member 33 is disposed within valve body 15 and forms a guide to ensure correct movement in vertical direction of valve body 15. Said guide member may extend further downwards than is shown in Figure 2.

Valve body 15 is provided with a central passage 35, which connects to a central passage 36 within guide member 33.

Second housing part 19 comprises a second valve seat 41, which is capable of sealing cooperation with a second membrane 42 (Figure 5). As long as membrane 42 closes valve seat 41, the gas valve remains closed, due to the resulting downward force on valve body 15, as described above. The gas valve is opened in that membrane 45 is lifted from valve seat 41, as a result of which control chamber 31 is connected, via passage 36 in the guide member 33 disposed in passage 33, to gas outlet 13, where a lower gas pressure prevails. The gas pressure fall-out in control chamber 31 causes membrane 16, 17, and thus valve body 15, to move in upward direction, as a result of which the gas valve is opened. This at least partially open position of the gas valve is shown in Figure 3, which figure shows fewer parts of the gas valve than Figure 2 for that matter, in particular first and second housing part 13, 19 and the parts present therein.

The second membrane 42 as shown in Figure 5, which can rest sealingly on valve seat 41, is clamped down at its circumferential edge between second housing part 19 and a third housing part 43, and it is provided with a central opening, in which a control element 44 is mounted. Control element 44 is provided with a central passage 45 and with a third valve seat 46, which supports a closing member 47 of a flexible material, which is fitted in the movable core 48 of an electromagnet 49.

Present on the upper side of second membrane 42 is a second control chamber 52, which is in communication with control chamber 31 via a throttle opening (not shown) in membrane 42. Consequently, the same gas pressure as in gas inlet 11 prevails in second control chamber 52 in the closed position of the gas valve. When the movable core 48 is moved in upward direction against the force of spring 54 as a result of electromagnet 49 being energized, the gas pressure in the second control chamber 52 will fall out, because an open communication to the gas outlet is created via open valve 46, 47, passage 45 in control element 44, passage 36 in guide member 33 and passage 35 in valve body 15. As a consequence, second membrane 42 will move in upward direction, so that control chamber 31 is placed into open communication with the gas outlet via valve 41, 42, passage 36 and passage 35. As already described before, this will cause valve member 15 to move in upward direction, as a result of which the gas valve is opened. In practice it has become apparent that when the gas valve is opened in this manner, wherein in fact three valves are opened in succession, said opening can take place very quickly.

The electromagnetic valve is controlled via a control unit 51.

The valve may also be operated by remote control, via a gas pipe which is connected with the second control chamber 52. Gas is discharged from second control chamber 52 via said gas pipe in that case so as to open the valve. To that end the gas pipe may be connected to an electromagnetically controlled gas valve, which is disposed at some distance from the valve.

The above-described embodiment only serves to explain the invention, may variations to it are possible.

## Claims

1. A gas valve comprising a housing with a gas inlet (11) and a gas outlet (12), which housing (13, 19) comprises an annular valve seat (14) and a valve body (15) disposed upstream thereof, which valve body (15) can sealingly rest on said valve seat (14), and which is centrally provided in a membrane (16, 17), whilst the circumferential edge of the membrane (16) is fixed in the housing (13, 19), wherein the side of the membrane (16) that faces towards the valve seat (14) is in direct communication with said gas inlet (11), and wherein the side of the membrane (16, 17) that faces away from the valve seat (14) bounds a control chamber (31) which is in communication with the gas inlat (11) via a throttle opening, wherein means (35, 36) are present for allowing gas to flow out of said control chamber (31) so as to reduce the pressure to such an extent that the valve body (15) is lifted from the valve seat (14), whereby said means (35, 36) place said control chamber (31) in communication with said gas outlet (12), said means comprising a stationary passage (36) coaxially with respect to the valve body (15), whereby the valve body (15) is substantially annular, **characterized in that** said means comprise a central passage (35) through the valve body (15) and that the membrane (16, 17) extends both outside the valve body (15) and within the valve body (15), seen in axial direction relative to the annular form, and the part of the membrane (17) that extends within the valve body (15) is fixed in the housing (19) round a passage (36) for discharging the gas from the control chamber (31) to the gas outlet (12).

2. A gas valve according to any one of the preceding claims, **characterized in that** the valve body (15) and the membrane (16, 17) are integrally formed from a piece of a flexible material.

3. A gas valve according to any one of the preceding claims, **characterized in that** the membrane (17) extending within the valve body (15) is substantially tubular at the location where it is fixed in the housing (19), extending in axial direction thereby.

4. A gas valve according any one of the preceding claims, **characterized in that** the control chamber (31) is annular, that the wall of the control chamber (31) disposed opposite said membrane (16, 17) comprises an annular protrusion (40) extending into the control chamber (31), and that the membrane (16, 17) is disposed on either side of said protrusion (40) in the open position of the valve.

5. A gas valve according to any one of preceding claims, **characterized in that** said passage (36) is connected to a second valve seat (41) provided in the housing (19), which can be closed by a second valve body (42) for placing said passage (36) into communication with the control chamber (31) or shutting if off therefrom.

6. A gas valve according to claim 5, **characterized in that** the second valve body (42) is centrally provided in a second membrane (42), which second membrane (42) on the one hand bounds said control chamber (31) and which on the other hand bounds a second control chamber (52), which second membrane (42) comprises a central passage (35, 36) which is capable of placing the second control chamber (52) into communication with the central passage of the valve, which passage (45) is provided with a third valve seat (46), which mates with a closing member (47) which forms part of the movable core (48) of a controllable electromagnet (49).

7. A gas valve according to any one of the preceding claims, **characterized in that** an electromagnetically controlled valve (41, 42, 46, 47) is present for controlling the connection between the control chamber (31) and the gas outlet (12).

8. A gas valve according to any one of the preceding claims, **characterized in that** a stationary guide member (33) is provided within the valve body (15).

9. A gas valve according to claim 8, **characterized in that** said guide member (33) is fixed in the housing (19) together with the central portion of the membrane (17).

10. A gas valve according to claim 9, **characterized in that** said guide member (33) comprises a passage (36) for placing the control chamber (31) into communication with the gas outlet (12).

11. A gas valve according to any one of the preceding claims, comprising a housing (13, 19) which consists of at least two attached-together parts, between which a sealing ring and/or the circumferential edge (18) of a membrane (16, 17) is fitted, **characterized in that** each of said parts (13; 19) is provided with a cylindrically extending surface (21, 22), an inwardly extending surface (21) and an outwardly extending surface (22), respectively, between which surfaces (21, 22) the sealing ring and/or the circumferential edge (18) of said membrane (16, 17) is (are) fitted.

12. A method of delivering a gas pulse by means of a gas valve comprising a housing with a gas inlet (11) and a gas outlet (12), which housing (13, 19) comprises an annular valve seat (14) and a valve body (15) disposed upstream thereof, which valve body (15) sealingly rests on said valve seat (14) when the valve is closed, whereby the valve body (15) is centrally provided in a membrane (16, 17), whilst the circumferential edge of the membrane (16) is fixed in the housing (13, 19), wherein the side of the membrane (16) that faces towards the valve seat (14) is in direct communication with said gas inlet (11), and wherein the side of the membrane (16, 17) that faces away from the valve seat (14) bounds a control chamber (31) which is in communication with the gas inlet (11) via a throttle opening, whereby the valve is opened by reducing the pressure in the control chamber (31) for allowing gas to flow out of said control chamber (31), whereby means (35, 36) place said control chamber (31) in communication with said gas outlet (12), said means comprising a stationary passage (36) coaxially with respect to the valve body (15), whereby the valve body (15) is substantially annular, **characterized in that** said means comprise a central passage (35) through the valve body (15) and that the membrane (16, 17) extends both outside the valve body (15) and within the valve body (15), seen in axial direction relative to the annular form, and the part of the membrane (17) that extends within the valve body (15) is fixed in the housing (19! round a passage (36) for discharging the gas from the control chamber (31) to the gas outlet (12).

## Patentansprüche

1. Gasventil, das ein Gehäuse mit einem Gaseinlaß (11) und mit einem Gasauslaß (12) umfaßt, wobei das Gehäuse (13, 19) einen ringförmigen Ventilsitz (14) und einen Ventilkörper (15) aufweist, der stromauf davon angeordnet ist, wobei der Ventilkörper (15) abdichtend auf dem Ventilsitz aufliegen kann, und wobei dieser zentral in einer Membran (16, 17) angeordnet ist, während der Umfangsrand der Membran (16) in dem Gehäuse (13, 19) fixiert ist, wobei die Seite der Membran (16), die in Richtung auf den Ventilsitz (14) weist, in unmittelbarer Verbindung mit dem Gaseinlaß (11) steht, und wobei die Seite der Membran (16, 17), die von dem Ventilsitz (14) weg weist, eine Steuerkammer (31) begrenzt, die in Verbindung mit dem Gaseinlaß (11) über eine Drosselöffnung steht, wobei Mittel (35, 36) vorhanden sind, um zu ermöglichen, daß Gas aus der Steuerkammer (31) ausströmt, um den Druck auf einen solchen Wert zu reduzieren, daß der Ventilkörper (15) von dem Ventilsitz (14) abgehoben wird, wobei die genannten Mittel (35, 36) die Steuerkammer (31) in Verbindung mit dem Gasauslaß (12) bringen, und wobei die Mittel einen ortsfesten Durchlaß (36) koaxial in Bezug auf den Ventilkörper (15) aufweisen, so daß der Ventilkörper (15) im wesentlichen ringförmig ist, **dadurch gekennzeichnet, daß** die genannten Mittel einen zentralen Durchlaß (35) durch den Ventilkörper (15) aufweisen und daß sich die Membran (16, 17) sowohl außerhalb des Ventilkörpers (15) als auch innerhalb des Ventilkörpers (15) erstreckt, in einer axialen Richtung relativ zu der ringförmigen Form gesehen, wobei der Teil der Membran (17), der sich innerhalb des Ventilkörpers (15) erstreckt, in dem Gehäuse (19) um einen Durchlaß (36) zum Abgeben des Gases aus der Steuerkammer (31) zu dem Gasauslaß (12) fixiert ist.

2. Gasventil nach einem der vorangehenden Ansprüche, **dadurch gekennzeichnet, daß** der Ventilkörper (15) und die Membran (16, 17) einteilig aus einem Stück eines flexiblen Materials gebildet sind.

3. Gasventil nach einem der vorangehenden Ansprüche, **dadurch gekennzeichnet, daß** die Membran (17), die sich innerhalb des Ventilkörpers (15) erstreckt, im wesentlichen rohrförmig an der Stelle ist, an der sie in dem Gehäuse (19) fixiert ist, wobei sie sich dadurch in axialer Richtung erstreckt.

4. Gasventil nach einem der vorangehenden Ansprüche, **dadurch gekennzeichnet, daß** die Steuerkammer (31) ringförmig ist und die Wand der Steuerkammer (31), die gegenüberliegend der genannten Membran (16, 17) angeordnet ist, einen ringförmigen Vorsprung (40) aufweist, der sich in die Steuerkammer (31) hineinerstreckt, wobei sich die Membran (16, 17) in der geöffneten Stellung des Ventils auf beiden Seiten des genannten Vorsprungs (40) befindet.

5. Gasventil nach einem der vorangehenden Ansprüche, **dadurch gekennzeichnet, daß** der genannte Durchlaß (36) mit einem zweiten Ventilsitz (41) verbunden ist, der in dem Gehäuse (19) angeordnet ist, wobei dieser durch einen zweiten Ventilkörper (42) geschlossen werden kann, um dem genannten Durchlaß (36) in Verbindung mit der Steuerkammer (31) zu bringen oder um ihn gegenüber dieser abzuschließen.

6. Gasventil nach Anspruch 5, **dadurch gekennzeichnet, daß** der zweite Ventilkörper (42) zentral in einer zweiten Membran (42) angeordnet ist, wobei die zweite Membran (42) auf der einen Seite die genannte Steuerkammer (31) begrenzt und auf der anderen Seite eine zweite Steuerkammer (52) begrenzt, wobei die zweite Membran (42) einen zentralen Durchlaß (35, 36) aufweist, der in der Lage ist, die zweite Steuerkammer (52) in Verbindung mit dem zentralen Durchlaß des Ventils zu bringen, wobei der Durchlaß (45) mit einem dritten Ventilsitz (46) versehen ist, der mit einem Verschlußelement (47) zusammenwirkt, welches einen Teil eines bewegbaren Kerns (48) eines steuerbaren Elektromagneten (49) bildet.

7. Gasventil nach einem der vorangehenden Ansprüche, **dadurch gekennzeichnet, daß** ein elektromagnetisch gesteuertes Ventil (41, 42; 46, 47) vorhanden ist, um die Verbindung zwischen der Steuerkammer (31) und dem Gasauslaß (12) zu steuern.

8. Gasventil nach einem der vorangehenden Ansprüche, **dadurch gekennzeichnet, daß** ein ortsfestes Führungsteil (33) innerhalb des Ventilkörpers (15) vorgesehen ist.

9. Gasventil nach Anspruch 8, **dadurch gekennzeichnet, daß** das Führungsteil (33) in dem Gehäuse (19) zusammen mit dem zentralen Abschnitt der Membran (17) fixiert ist.

10. Gasventil nach Anspruch 9, **dadurch gekennzeichnet, daß** das Führungsteil (33) einen Durchlaß (36) aufweist, um die Steuerkammer (31) in Verbindung mit dem Gasauslaß (12) zu bringen.

11. Gasventil nach einem der vorangehenden Ansprüche, mit einem Gehäuse (13, 19), das aus zumindest zwei aneinander befestigten Teilen besteht, zwischen denen ein Dichtring und/oder Umfangsrand (18) einer Membran (16, 17) fixiert ist, **dadurch gekennzeichnet, daß** jeder der genannten Teile (13; 19) mit einer zylindrisch verlaufenden Oberfläche (21, 22) versehen ist, einer sich nach innen erstreckenden Oberfläche (21) und einer sich nach außen erstreckenden Oberfläche (22), wobei der Dichtring und/oder der Umfangsrand (18) der Membran (16, 17) zwischen diesen Oberflächen (21, 22) befestigt ist (sind).

12. Verfahren zum Abgeben eines Gasimpulses mit Hilfe eines Gasventils, das ein Gehäuse mit einem Gaseinlaß (11) und einem Gasauslaß (12) umfaßt, wobei das Gehäuse (13, 19) einen ringförmigen Ventilsitz (14) und einen Ventilkörper (15) aufweist, der stromauf davon angeordnet ist, wobei der Ventilkörper (15) abdichtend auf dem Ventilsitz (14) aufliegt, wenn das Ventil geschlossen ist, wobei der Ventilkörper (15) zentral in einer Membran (16, 17) angeordnet ist, während der Umfangsrand der Membran (16) in dem Gehäuse (13, 19) fixiert ist, wobei die Seite der Membran (16), die in Richtung auf den Ventilsitz (14) weist, in unmittelbarer Verbindung mit dem Gaseinlaß (11) steht, und wobei die Seite der Membran (16, 17), die von dem Ventilsitz (14) wegweist, eine Steuerkammer (31) begrenzt, die in Verbindung mit dem Gaseinlaß (11) über eine Drosselöffnung steht, wobei das Ventil dadurch geöffnet wird, daß der Druck in der Steuerkammer (31) reduziert wird, um zu ermöglichen, daß Gas aus der Steuerkammer (31) ausströmt, wobei Mittel (35, 36) die Steuerkammer (31) in Verbindung mit dem Gasauslaß (12) bringen, wobei die genannten Mittel einen ortsfesten Durchlaß (36) koaxial in Bezug auf den Ventilkörper (15) aufweisen, wobei der Ventilkörper (15) im wesentlichen ringförmig ist, **dadurch gekennzeichnet, daß** die genannten Mittel einen zentralen Durchlaß (35) durch den Ventilkörper (15) aufweisen und daß sich die Membran (16, 17) sowohl außerhalb des Ventilkörpers (15) als auch innerhalb des Ventilkörpers (15) erstreckt, in einer axialen Richtung relativ zu der ringförmigen Form gesehen, und der Teil der Membran (17), der sich innerhalb des Ventilkörpers (15) erstreckt, in dem Gehäuse (19) um einen Durchlaß (36) zum Abgeben des Gases aus der Steuerkammer (31) zu dem Gasauslaß (12) fixiert ist.

## Revendications

1. Robinet à gaz comprenant un boîtier possédant une entrée de gaz (11) et une sortie de gaz (12), le boîtier (13, 19) comporte un siège annulaire (14) de robinet et un corps d'obturateur (15) disposé en amont du siège, le corps d'obturateur (15) peut être en appui de manière étanche sur le siège de robinet (14), et comportant au centre une membrane (16, 17), alors que le bord circonférentiel de la membrane (16) est fixé dans le boîtier (13, 19), dans lequel le côté de la membrane (16) qui est tourné vers le siège de robinet (14) est en communication directe avec l'entrée de gaz (11), et dans lequel le côté de la membrane (16, 17) qui est du côté opposé au siège de robinet (14) délimite une chambre de commande (31) qui communique avec l'entrée de gaz (11) par une ouverture d'étranglement, dans lequel un dispositif (35, 36) est présent afin qu'il permette la circulation du gaz vers l'extérieur de la chambre de commande (31) et réduise ainsi la pression au point que le corps d'obturateur (15) se soulève par rapport au siège de robinet (14), si bien que ce dispositif (35, 36) place la chambre de commande (31) en communication avec la sortie de gaz (12), ce dispositif comprenant un passage fixe (36) coaxial au corps de robinet (15), tel que le corps de robinet (15) est pratiquement annulaire, **caractérisé en ce que** ledit dispositif comprend un passage central (35) formé dans le corps de robinet (15), et **en ce que** la membrane (16, 17) s'étend à la fois à l'extérieur du corps de robinet (15) et dans le corps de robinet (15), vue en direction axiale par rapport à la forme annulaire, et la partie de la membrane (17) qui s'étend dans le corps de robinet (15) est fixée dans le boîtier (19) autour d'un passage (36) d'évacuation du gaz de la chambre de commande (31) vers la sortie de gaz (12).

2. Robinet à gaz selon l'une quelconque des revendications précédentes, **caractérisé en ce que** le corps de robinet (15) et la membrane (16, 17) sont formés solidairement en un élément d'un matériau flexible.

3. Robinet à gaz selon l'une quelconque des revendications précédentes, **caractérisé en ce que** la membrane (17) qui s'étend dans le corps de robinet (15) est pratiquement tubulaire à l'emplacement auquel elle est fixée dans le boîtier (19), en s'étendant dans la direction axiale de cette manière.

4. Robinet à gaz selon l'une quelconque des revendications précédentes, **caractérisé en ce que** la chambre de commande (31) est annulaire, **en ce que** la paroi de la chambre de commande (31) qui est opposée à la membrane (16, 17) possède une saillie annulaire (40) qui s'étend dans la chambre de commande (31), et **en ce que** la membrane (16, 17) est disposée de part et d'autre de la saillie (40) dans la position d'ouverture du robinet.

5. Robinet à gaz selon l'une quelconque des revendications précédentes, **caractérisé en ce que** ledit passage (36) est raccordé à un second siège de robinet (41) disposé dans le boîtier (19) et qui peut être fermé par un second corps d'obturateur (42) destiné à placer ledit passage (36) en communication avec la chambre de commande (31) ou à fermer cette communication.

6. Robinet à gaz selon la revendication 5, **caractérisé en ce que** le second corps d'obturateur (42) est disposé au centre dans une seconde membrane (42), la seconde membrane (42) d'une part délimite la chambre de commande (31) et d'autre part délimite une seconde chambre de commande (52), la seconde membrane (42) comporte un passage central (35, 36) qui peut placer la seconde chambre de commande (52) en communication avec le passage central du robinet, et le passage (45) a un troisième siège de robinet (46) qui coopère avec un organe de fermeture (47) qui fait partie du noyau mobile (48) d'un électro-aimant (49) qui peut être commandé.

7. Robinet à gaz selon l'une quelconque des revendications précédentes, **caractérisé en ce qu'**une électrovanne (41, 42 ; 46, 47) est incorporée pour la commande du raccordement de la chambre de commande (31) et de la sortie de gaz (12).

8. Robinet à gaz selon l'une quelconque des revendications précédentes, **caractérisé en ce qu'**un organe fixe de guide (33) est placé dans le corps (15) de robinet.

9. Robinet à gaz selon la revendication 8, **caractérisé en ce que** l'organe de guide (33) est fixé dans le boîtier (19) avec la partie centrale de la membrane (17).

10. Robinet à gaz selon la revendication 9, **caractérisé en ce que** l'organe de guide (33) comprend un passage (36) destiné à mettre la chambre de commande (31) en communication avec la sortie de gaz (12).

11. Robinet à gaz selon l'une quelconque des revendications précédentes, comprenant un boîtier (13, 19) qui est constitué d'au moins deux parties fixées mutuellement entre lesquelles sont montés une bague d'étanchéité et/ou le bord circonférentiel (18) d'une membrane (16, 17), **caractérisé en ce que** chacune des parties (13 ; 19) a une surface cylindrique (21, 22), une surface (21) qui s'étend vers l'intérieur et une surface (22) qui s'étend vers l'extérieur respectivement, la bague d'étanchéité et/ou le bord circonférentiel (18) de la membrane (16, 17) étant montés entre ces surfaces (21, 22).

12. Procédé de distribution d'une impulsion de gaz à l'aide d'un robinet à gaz comprenant un boîtier ayant une entrée de gaz (11) et une sortie de gaz (12), ce boîtier (13, 19) comprenant un siège annulaire de robinet (14) et un corps d'obturateur (15) placé en amont du siège, le corps d'obturateur (15) étant en appui de manière étanche sur le siège (14) de robinet lorsque le robinet est fermé, le corps d'obturateur (15) est disposé au centre dans une membrane (16, 17) alors que le bord circonférentiel de la membrane (16) est fixé dans le boîtier (13, 19), dans lequel le côté de la membrane (16) qui est tourné vers le siège de robinet (14) est en communication directe avec l'entrée de gaz (11) et le côté de la membrane (16, 17) qui est tourné du côté opposé au siège d'obturateur (14) délimite une chambre de commande (31) qui est en communication avec l'entrée de gaz (11) par une ouverture d'étranglement, si bien que le robinet est ouvert par réduction de la pression dans la chambre de commande (31) afin que le gaz puisse s'écouler vers l'extérieur de la chambre de commande (31), et un dispositif (35, 36) place la chambre de commande (31) en communication avec la sortie de gaz (12), le dispositif comprenant un passage fixe (36) coaxial au corps d'obturateur (15), et le corps d'obturateur (15) est pratiquement annulaire, **caractérisé en ce que** ledit dispositif comporte un passage central (35) formé dans le corps d'obturateur (15), et **en ce que** la membrane (16, 17) s'éland à la fois à l'extérieur du corps d'obturateur (15) et dans le corps d'obturateur (15), vue dans la direction axiale par rapport à la forme annulaire, et la partie de la membrane (17) qui s'étend dans le corps d'obturateur (15) est fixée dans le boîtier (19) autour d'un passage (36) d'évacuation du gaz de la chambre de commande (31) vers la sortie de gaz (12).
